# EUROPEAN PATENT SPECIFICATION

(11) **EP 3 730 277 B1**
(45) Date of publication and mention of the grant of the patent: **12.01.2022**
(21) Application number: 19170701.7
(22) Date of filing: 23.04.2019
(51) Int. Cl.: B29C 48/92, B29C 48/255, B29C 64/118, B33Y 30/00, B29C 64/209, B29C 64/112, B33Y 10/00

(54) **PLASTIC EXTRUDER WITH A NEEDLE VALVE NOZZLE**
KUNSTSTOFFEXTRUDER MIT EINER NADELVERSCHLUSSDÜSE
EXTRUDEUSE EN PLASTIQUE AVEC UNE BUSE À OBTURATEUR

(43) Date of publication of application: 28.10.2020
(73) Proprietor: National Kaohsiung University of Science and Technology, Kaohsiung 80778 (TW); Formosa Plastics Corporation, Kaohsiung City 81465 (TW)
(72) Inventor: HUANG, Chung-Ching, 80778 Kaohsiung (TW); LEE, Te-Wen, 82248 Kaohsiung City (TW); WU, Jen-Long, 81465 Kaohsiung City (TW); KANG, Wen-Hao, 81465 Kaohsiung City (TW); WENG, Ying-Cheng, 81465 Kaohsiung City (TW)
(74) Representative: Broderick, Terence

(56) References cited:
- WO-A1-2018/210183
- CN-A- 103 692 653
- CN-A- 104 842 561
- DE-A1-102017 205 673
- US-B1- 10 201 503

## Description

The disclosure relates to a forming system, and more particularly to a lamination forming system by using directly a plastic sheet, plastic powder, or plastic particles as a plastic raw material.

In order for forming laminations, an existing lamination forming system usually utilizes a plastic wire material that is pre-formed for use as a raw material. Such a plastic wire material is not as common as particulate or granular plastic materials, which are major raw materials in processing plastics. Generally, the plastic wire material is produced by processing a particulate or granular plastic material through intricate steps. Besides, not all kinds of plastic particles or granules can be processed into plastic wires. Therefore, applications of the existing lamination forming system are limited by the plastic wire materials. An example of a lamination forming system is disclosed in US10201503.

Therefore, an object of the disclosure is to provide a lamination forming system that can alleviate the drawback of the prior art.

The invention is defined in independent claim 1 and uses a lamination forming system includes a melt extruder, a nozzle unit and a carrier unit.

The melt extruder is configured to melt a plastic raw material, such as a plastic sheet, plastic powder, or plastic particles, into a plastic melt and to deliver the same.

The nozzle unit includes a nozzle head including a sprue channel that has an inlet connected proximally to the melt extruder for entry of the melt plastic into the sprue channel, and an outlet disposed distally from the inlet to deliver the plastic melt from the sprue channel.

The carrier unit includes a slide table controllable to move relative to the nozzle head. The slide table is configured to carry the plastic melt outputted from the outlet of the nozzle head.

Other features of the invention are defined by the appended set of claims and advantages of the disclosure will become apparent in the following detailed description of the embodiment with reference to the accompanying drawings, of which:
Figure 1 is a schematic view illustrating an embodiment of a lamination forming system according to the disclosure;
Figure 2 is a top view of the embodiment; and
Figure 3 is an enlarged fragmentary sectional view of the embodiment illustrating a nozzle unit of the lamination forming system.

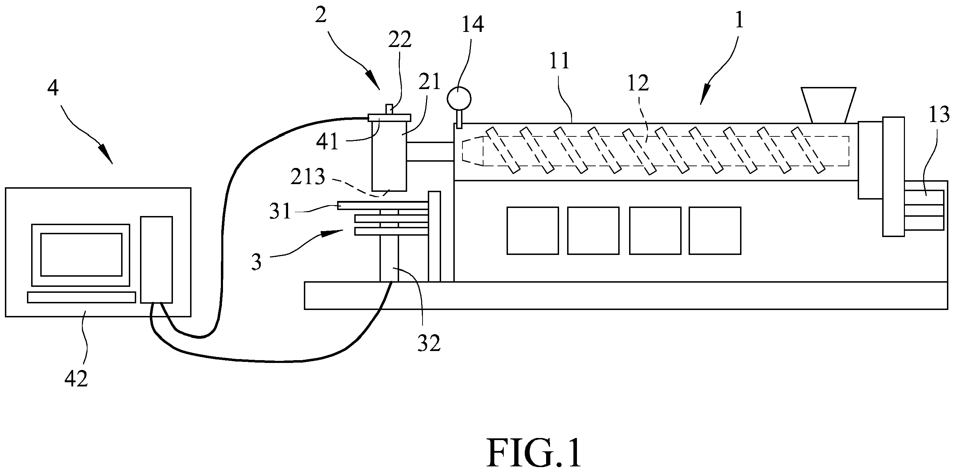

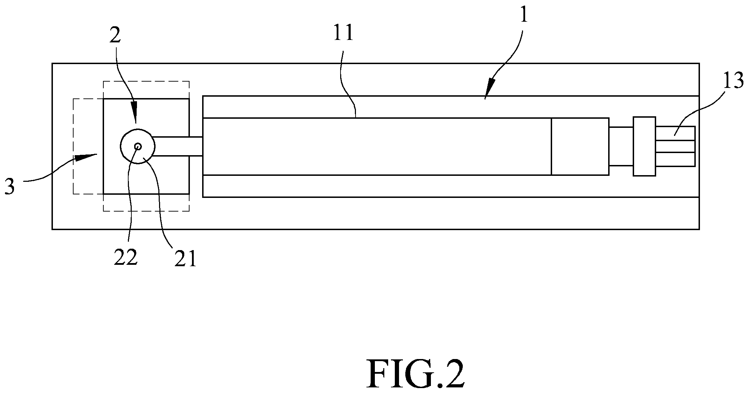

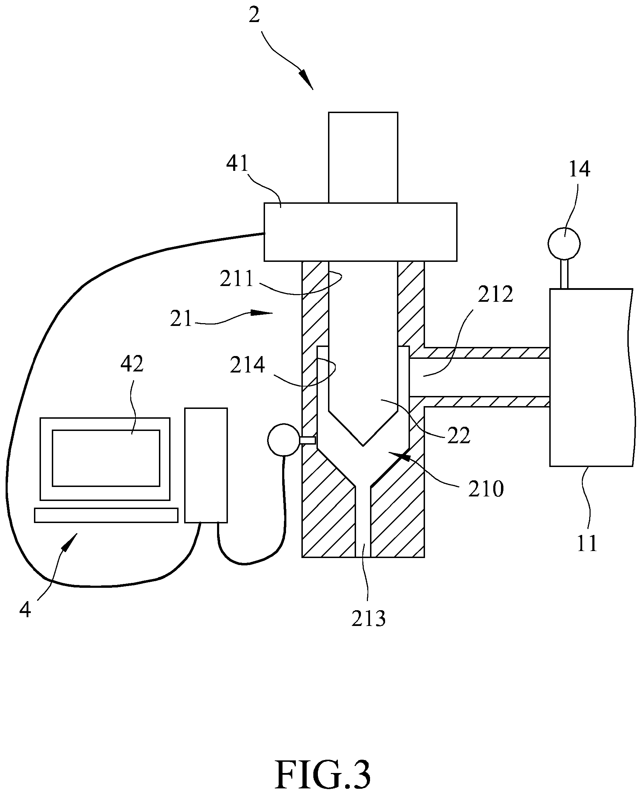

Figures 1 to 3, illustrate an embodiment of a lamination forming system according to the disclosure. The lamination forming system of the disclosure includes a melt extruder 1, a nozzle unit 2, a carrier unit 3 and a control unit 4.

The melt extruder 1 includes a feed barrel 11 having a controlled temperature, a screw shaft 12 rotatably disposed within and extending axially along the feed barrel 11, a drive module 13 driving rotation of the screw shaft 12, and a pressure sensor 14 detecting pressure inside the feed barrel 11. The feed barrel 11 melts a plastic raw material, such as a plastic sheet, plastic powder, or plastic particles, into a plastic melt. The screw shaft 12 is rotated by the drive module 13 to extrude the plastic melt from the feed barrel 11. A temperature of the feed barrel 11 is controlled by a digital proportion-integral-derivative temperature controller. Pressure inside the feed barrel 11 is controlled by monitoring the pressure with the pressure sensor 14 and by controlling rotation speed of the screw shaft 12. The rotation speed of the screw shaft 12 ranges from 1 to 36 rpm. An extrudate rate of the screw shaft 12 ranges from 0.12 to 4 kg/hr. The drive module 13 is a feedback motor of 750W that controls the rotation speed of the screw shaft 12.

The nozzle unit 2 includes a nozzle head 21 and a valve needle 22. The feed barrel 11 is connected to the nozzle head 21. The nozzle head 21 includes a sprue channel 210 and a valve passage 211. The sprue channel 210 has an inlet 212 connected proximally to the feed barrel 11 of the melt extruder 1 for entry of the melt plastic into the sprue channel 210, an outlet 213 disposed distally from the inlet 212 to deliver the plastic melt from the sprue channel 210, and a controlled sprue region 214 communicating the inlet 212 and the outlet 213 to receive the plastic melt. The outlet 213 is connected to a bottom of the controlled sprue region 214. The inlet 212 is located at one side of the controlled sprue region 214 between the top and bottom of the controlled sprue region 214. The bottom of the controlled sprue region 214 has a sprue tapered end connected to the outlet 213. The valve passage 211 is connected to a top of the controlled sprue region 214 and is smaller in cross section than the controlled sprue region 214. The valve needle 22 extends downwardly through the valve passage 211 into the controlled sprue region 214. The valve needle 22 is controllable to move within the controlled sprue region 214 so as to vary an amount of the plastic melt delivered from the outlet 213. In addition, the valve needle 22 has a needle tapered end movable in a direction toward or away from the sprue tapered end of the controlled sprue region 214. In this embodiment, the outlet 213 has a diameter of 1mm. The nozzle head 21 is replaceable to change the diameter of the outlet 213. The valve needle 22 is driven by a servo motor (not shown) and a screw mechanism (not shown) to be moved upwardly and downwardly relative to the nozzle head 21. The travel distance of the valve needle 22 is equal to or smaller than 5mm.

The sprue tapered end of the controlled sprue region 214 defines a melt flow passage around the valve needle 22 to allow passage of the plastic melt into the outlet 213. The melt flow passage extends from the inlet 212 to the outlet 213. A cross-sectional area of the melt flow passage is varied when the valve needle 22 moves within the controlled sprue region 214 so that the amount of the plastic melt delivered from the outlet213 is varied. In other words, when the needle tapered end of the valve needle 22 moves downward and toward the sprue tapered end of the controlled sprue region 214, the cross-sectional area of the melt flow passage is reduced, thereby increasing a pressure difference between the inlet and outlet 212, 213. When the needle tapered end of the valve needle 22 moves away from the sprue tapered end of the controlled sprue region 214, the pressure difference is reduced. The amount of the plastic melt delivered from the outlet 213 is varied when the pressure difference between the inlet 212 and outlet 213 is varied.

The carrier unit 3 includes a slide table 31 and a triaxial drive mechanism 32. The slide table 31 is disposed beneath the outlet 213 and controllable to move relative to the nozzle head 21. The triaxial drive mechanism 32 drives triaxial movement of the slide table 31. In this embodiment, the slide table 31 is an electrically operated table, such as a CKD ETS electric table with a size of 300x300x400 mm. The triaxial drive mechanism has a 20-bit resolution motor (not shown) and drives movement of the slide table 31 by a track chain (not shown).

The control unit 4 includes a pressure monitor control module 41 and a human interface module 42. The pressure monitor control module 41 detects pressure in the controlled sprue region 214 of the sprue channel 210, and controls movement of the valve needle 22. The human interface module 42 is electrically connected to the pressure monitor control module 41 and the triaxial drive mechanism 32. A pressure value detected by the pressure monitor control module 41 inside the sprue channel 210 is compared to a pressure value detected by the pressure sensor 14 in the feed barrel 11 so as to obtain a pressure difference between the inlet 212 and the outlet 213. By controlling the pressure difference between the inlet 212 and the outlet 213, the amount of the plastic melt delivered from the outlet 213 is controlled.

Because the melt extruder 1 can directly melt a common plastic raw material, such as a plate-shaped, powdered, or granular plastic material to form the plastic melt, no plastic wire is needed to be pre-formed for use as a starting material for lamination. Thus, the raw material usable for the lamination forming system need not be limited to particular plastics.

The amount of the plastic melt delivered from the outlet 213 is controlled by controlling the position of the needle tapered end of the valve needle 22 relative to the sprue tapered end of the controlled sprue region 214. The slide table 31 carries the plastic melt outputted from the nozzle head 21, and is driven by the triaxial drive mechanism 32 to move relative to the nozzle unit 2 according to the input data, so that a product with a desired profile is formed from the plastic melt on the slide table 31.

In the description above, for the purposes of explanation of the invention as set forth by the claims, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A lamination forming system, comprising:
a melt extruder (1) configured to melt a plastic raw material, such as a plastic sheet, plastic powder, or plastic particles, into a plastic melt and to deliver the same;
a nozzle unit (2) including a nozzle head (21) including a sprue channel (210) that has an inlet (212) connected proximally to said melt extruder (1) for entry of the melt plastic into said sprue channel (210), and an outlet (213) disposed distally from said inlet (212) to deliver the plastic melt from said sprue channel (210); and
a carrier unit (3) including a slide table (31) controllable to move relative to said nozzle head (21), said slide table (31) being configured to carry the plastic melt outputted from said outlet(213) of said nozzle head (21);
wherein said sprue channel (210) further has a controlled sprue region (214) communicating said inlet (212) and said outlet (213) to receive the plastic melt, said outlet (213) connected to a bottom of said controlled sprue region (214), said nozzle head (21) further having a valve passage (211) that is connected to a top of said controlled sprue region (214) and that is smaller in cross section than said controlled sprue region (214), said inlet (212) being located at one side of said controlled sprue region (214) between said top and bottom of said controlled sprue region (214), said nozzle unit (2) further including a valve needle (22) extending downwardly through said valve passage (211) into said controlled sprue region (214), said controlled sprue region defining a melt flow passage that is formed around said valve needle (22) and that extends from said inlet (212) to said outlet (213), said valve needle (22) being controllable to move upward or downward within said controlled sprue region (214), a cross sectional area of said melt flow passage being varied when said valve needle (22) moves upward or downward;
wherein said melt extruder (1) includes a feed barrel (11) having a controlled temperature and connected to said inlet (212) of said nozzle head (21), a screw shaft (12) rotatably disposed within and extending axially along said feed barrel (11), and a drive module (13) driving rotation of said screw shaft (12) to extrude the plastic melt from said feed barrel (11);
wherein said melt extruder (1) further includes a pressure sensor (14) detecting pressure in said feed barrel (11), said lamination forming system further including a pressure monitor control module (41) that is configured to detect pressure in said controlled sprue region (214) of said sprue channel (210)
wherein said lamination forming system further includes a human interface module (42) electrically connected to said pressure monitor control module (41);
**characterized in that** the pressure monitor control module (41) is configured to control the movement of said valve needle (22); and wherein the pressure monitor control module (41) is configured to compare a pressure value detected by the pressure monitor control module (41) inside said sprue channel (210) to a pressure value detected by said pressure sensor (14) in said feed barrel (11) so as to obtain a pressure difference between said inlet (212) and said outlet (213), and an amount of the plastic melt delivered from said outlet (213) is controlled by controlling said pressure difference between said inlet (212) and said outlet (213).

2. The lamination forming system as claimed in Claim 1, **characterized in that** said bottom of said controlled sprue region (214) has a sprue tapered portion connected to said outlet (213), a top end of said sprue tapered portion disposed between said inlet (212) and said outlet (213), said valve needle (22) having a needle tapered end movable in a direction toward or away from said sprue tapered end.

3. The lamination forming system as claimed in Claim 1, **characterized in that** said carrier unit (3) further includes a triaxial drive mechanism (32) driving movement of said slide table (31), said human interface module (42) being electrically connected to said triaxial drive mechanism (32).

## Patentansprüche

1. Laminierungsbildungssystem, umfassend:
einen Schmelzextruder (1), der konfiguriert ist, um ein Kunststoffrohmaterial, z. B. eine Kunststofffolie, Kunststoffpulver oder Kunststoffpartikel, in eine Kunststoffschmelze einzuschmelzen und dieses abzugeben;
eine Düseneinheit (2) mit einem Düsenkopf (21) mit einem Angusskanal (210), der einen Einlass (212) aufweist, der proximal mit dem Schmelzextruder (1) zum Eintritt des Schmelzkunststoffs in den Angusskanal (210) verbunden ist, und einen Auslass (213), der distal von dem Einlass (212) angeordnet ist, um die Kunststoffschmelze aus dem Angusskanal (210) abzugeben; und
eine Trägereinheit (3) mit einem Gleittisch (31), der steuerbar ist, um sich relativ zu dem Düsenkopf (21) zu bewegen, wobei der Gleittisch (31) konfiguriert ist, um die aus dem Auslass (213) des Düsenkopfs (21) ausgegebene Kunststoffschmelze zu tragen;
wobei der Angusskanal (210) ferner einen gesteuerten Angussbereich (214) aufweist, der den Einlass (212) und den Auslass (213) verbindet, um die Kunststoffschmelze aufzunehmen, wobei der Auslass (213) mit einem Boden des gesteuerten Angussbereichs (214) verbunden ist, der Düsenkopf (21) ferner einen Ventildurchgang (211) aufweist, der mit einer Oberseite des gesteuerten Angussbereichs (214) verbunden ist und der einen kleineren Querschnitt als der gesteuerte Angussbereich (214) hat, der Einlass (212) an einer Seite des gesteuerten Angussbereichs (214) zwischen der Oberseite und dem Boden des gesteuerten Angussbereichs (214) angeordnet ist, die Düseneinheit (2) ferner mit einer Ventilnadel (22), die sich nach unten durch den Ventildurchgang (211) in den gesteuerten Angussbereich (214) erstreckt, der gesteuerte Angussbereich einen Schmelzflussdurchgang definiert, der um die Ventilnadel (22) herum gebildet ist und der sich vom Einlass (212) zum Auslass (213) erstreckt, wobei die Ventilnadel (22) steuerbar ist, um sich innerhalb des gesteuerten Angussbereichs (214) nach oben oder unten zu bewegen, wobei eine Querschnittsfläche des Schmelzflussdurchgangs variiert wird, wenn die Ventilnadel (22) sich nach oben oder unten bewegt;
wobei der Schmelzextruder (1) einen Zufuhrzylinder (11) mit einer gesteuerten Temperatur umfasst und mit dem Einlass (212) des Düsenkopfs (21) verbunden ist, eine Schraubenwelle (12), die drehbar darin angeordnet ist und sich axial entlang des Zufuhrzylinders (11) erstreckt, und ein Antriebsmodul (13), der die Drehung der Schraubenwelle (12) antreibt, um die Kunststoffschmelze aus dem Zufuhrzylinder (11) zu extrudieren;
wobei der Schmelzextruder (1) weiterhin einen Drucksensor (14) umfasst, der den Druck in dem Zufuhrzylinder (11) erfasst, wobei das Schichtbildungssystem ferner ein Drucküberwachungssteuermodul (41) umfasst, das konfiguriert ist, um Druck in dem gesteuerten Angussbereich (214) des Angusskanals (210) zu erfassen;
wobei das Laminierungsbildungssystem ferner ein Human-Interface-Modul (42) umfasst, das elektrisch mit dem Drucküberwachungssteuermodul (41) verbunden ist;
**dadurch gekennzeichnet, dass** das Drucküberwachungssteuermodul (41) konfiguriert ist, um die Bewegung der Ventilnadel (22) zu steuern; und wobei das Drucküberwachungssteuermodul (41) konfiguriert ist, um einen Druckwert, der vom Drucküberwachungssteuermodul (41) innerhalb des Angusskanals (210) erfasst wird, mit einem Druckwert zu vergleichen, der von dem Drucksensor (14) in dem Zufuhrzylinder (11) erfasst wird, um eine Druckdifferenz zwischen dem Einlass (212) und dem Auslass (213) zu erhalten, und eine Menge der Kunststoffschmelze, die von dem Auslass (213) abgegeben wird, durch Steuern der Druckdifferenz zwischen dem Einlass (212) und dem Auslass (213) gesteuert wird.

2. Laminierungsbildungssystem nach Anspruch 1, **dadurch gekennzeichnet, dass** der Boden des gesteuerten Angussbereichs (214) einen mit dem Auslass (213) verbundenen verjüngten Angussabschnitt aufweist, ein oberes Ende des verjüngten Angussabschnitts zwischen dem Einlass (212) und dem Auslass (213) angeordnet ist, wobei die Ventilnadel (22) ein verjüngtes Nadelende aufweist, das in Richtung auf den verjüngten Angussbschnitt von diesem weg bewegbar ist.

3. Laminierungsbildungssystem nach Anspruch 1, **dadurch gekennzeichnet, dass** die Trägereinheit (3) ferner einen triaxialen Antriebsmechanismus (32) umfasst, der die Bewegung des Gleittisches (31) antreibt, wobei das Human-Interface-Modul (42) elektrisch mit dem triaxialen Antriebsmechanismus (32) verbunden ist.

## Revendications

1. Un système de formation de stratification, comprenant :
une extrudeuse de matière fondue (1) configurée de façon à fondre une matière première plastique, telle qu'une feuille plastique, une poudre plastique ou des particules plastiques, en une matière fondue plastique et à fournir celle-ci,
une unité buse (2) comprenant une tête de buse (21) comprenant un canal de coulée (210) qui possède un orifice d'admission (212) raccordé proximalement à ladite extrudeuse de matière fondue (1) en vue de l'entrée de la matière fondue plastique dans ledit canal de coulée (210) et un orifice de sortie (213) disposé distalement à partir dudit orifice d'admission (212) de façon à fournir la matière fondue plastique à partir dudit canal de coulée (210), et
une unité support (3) comprenant une table coulissante (31) pouvant être commandée de façon à se déplacer par rapport à ladite tête de buse (21), ladite table coulissante (31) étant configurée de façon à transporter la matière fondue plastique produite en sortie à partir dudit orifice de sortie (213) de ladite tête de buse (21),
où ledit canal de coulée (210) possède en outre une zone de coulée régulée (214) communiquant avec ledit orifice d'admission (212) et ledit orifice de sortie (213) de façon à recevoir la matière fondue plastique, ledit orifice de sortie (213) étant raccordé à une partie inférieure de ladite zone de coulée régulée (214), ladite tête de buse (21) possédant en outre un passage de soupape (211) qui est raccordé à une partie supérieure de ladite zone de coulée régulée (214) et qui est plus petit en section transversale que ladite zone de coulée régulée (214), ledit orifice d'admission (212) étant situé au niveau d'un côté de ladite zone de coulée régulée (214) entre lesdites parties supérieure et inférieure de ladite zone de coulée régulée (214), ladite unité buse (2) comprenant en outre un pointeau de soupape (22) s'étendant vers le bas au travers dudit passage de soupape (211) dans ladite zone de coulée régulée (214), ladite zone de coulée régulée définissant un passage d'écoulement de matière fondue qui est formé autour dudit pointeau de soupape (22) et qui s'étend dudit orifice d'admission (212) audit orifice de sortie (213), ledit pointeau de soupape (22) pouvant être commandé de façon à se déplacer vers le haut ou vers le bas à l'intérieur de ladite zone de coulée régulée (214), une zone de section transversale dudit passage d'écoulement de matière fondue étant variée lorsque ledit pointeau de soupape (22) se déplace vers le haut ou vers le bas,
où ladite extrudeuse de matière fondue (1) comprend un baril d'alimentation (11) possédant une température régulée et étant raccordé audit orifice d'admission (212) de ladite tête de buse (21), un arbre à vis (12) disposé en rotation à l'intérieur de et s'étendant axialement le long dudit baril d'alimentation (11), et un module d'entraînement (13) qui entraîne la rotation dudit arbre à vis (12) de façon à extruder la matière fondue plastique dudit baril d'alimentation (11),
où ladite extrudeuse de matière fondue (1) comprend en outre un capteur de pression (14) qui détecte la pression dans ledit baril d'alimentation (11), ledit système de formation de stratification comprenant en outre un module de commande de dispositif de surveillance de pression (41) qui est configuré de façon à détecter la pression dans ladite zone de coulée régulée (214) dudit canal de coulée (210),
où ledit système de formation de stratification comprend en outre un module d'interface humaine (42) électriquement raccordé audit module de commande de dispositif de surveillance de pression (41),
**caractérisé en ce que** le module de commande de dispositif de surveillance de pression (41) est configuré de façon à commander le déplacement dudit pointeau de soupape (22), et où le module de commande de dispositif de surveillance de pression (41) est configuré de façon à comparer une valeur de pression détectée par le module de commande de dispositif de surveillance de pression (41) à l'intérieur dudit canal de coulée (210) à une valeur de pression détectée par ledit capteur de pression (14) dans ledit baril d'alimentation (11) de façon à obtenir une différence de pression entre ledit orifice d'admission (212) et ledit orifice de sortie (213), et une quantité de la matière fondue plastique fournie à partir dudit orifice de sortie (213) est régulée par la régulation de ladite différence de pression entre ledit orifice d'admission (212) et ledit orifice de sortie (213).

2. Le système de formation de stratification selon la Revendication 1, **caractérisé en ce que** ladite partie inférieure de ladite zone de coulée régulée (214) possède une partie en biseau de coulée raccordée audit orifice de sortie (213), une extrémité supérieure de ladite partie en biseau de coulée étant disposée entre ledit orifice d'admission (212) et ledit orifice de sortie (213), ledit pointeau de soupape (22) possédant une extrémité en biseau de pointeau déplaçable dans une direction vers ou à l'écart de ladite extrémité en biseau de coulée.

3. Le système de formation de stratification selon la Revendication 1, **caractérisé en ce que** ladite unité support (3) comprend en outre un mécanisme d'entraînement triaxial (32) qui entraîne le déplacement de ladite table coulissante (31), ledit module d'interface humaine (42) étant électriquement raccordé audit mécanisme d'entraînement triaxial (32).
